# EUROPEAN PATENT SPECIFICATION

(11) **EP 4 440 038 B1**
(45) Date of publication and mention of the grant of the patent: **18.11.2026**
(21) Application number: 22914493.6
(22) Date of filing: 22.12.2022
(51) Int. Cl.: H04L 9/40, H04L 45/74, H04L 69/167, H04L 61/58

(54) **FLOOD ATTACK DEFENSE METHOD AND RELATED DEVICE**
VERFAHREN ZUR ABWEHR VON HOCHWASSERANGRIFFEN UND ZUGEHÖRIGE VORRICHTUNG
PROCÉDÉ DE DÉFENSE CONTRE LES ATTAQUES PAR INONDATION ET DISPOSITIF ASSOCIÉ

(30) Priority: 31.12.2021 CN 202111675698
(43) Date of publication of application: 02.10.2024
(73) Proprietor: Huawei Technologies Co., Ltd., Shenzhen, Guangdong 518129 (CN)
(72) Inventor: XUE, Wan, Shenzhen, Guangdong 518129 (CN)
(74) Representative: Thun, Clemens
(86) International application number: PCT/CN2022/141054
(87) International publication number: WO 2023/125239

(56) References cited:
- WO-A1-2010/072096
- CN-A- 103 036 794
- CN-A- 103 139 071
- CN-A- 113 037 879
- CN-A- 114 465 776
- US-A1- 2015 058 989
- NTT DOCOMO: "Addressing open issues for Ethernet port management", 3GPP TSG-SA2 MEETING #136 S2-1912369, 21 November 2019 (2019-11-21), XP051827402

## Description

### TECHNICAL FIELD

This application relates to the field of communication technologies, and in particular, to a flood attack defense method and a related apparatus.

### BACKGROUND

Currently, in internet protocol version 6 (internet protocol version 6, IPv6), neighbor discovery (neighbor discovery, ND) requires that a neighbor solicitation (neighbor solicitation, NS) packet needs to be learned. This is because a node needs to feed back a neighbor advertisement (neighbor advertisement, NA) packet after receiving the NS packet. Before feeding back the NA packet, the node needs to establish a neighbor cache entry based on the NS packet. In this way, the node may obtain a destination IPv6 address from the neighbor cache entry, and may correctly feed back the NA packet based on the destination IPv6 address. Because a quantity of neighbor cache entries is limited, a new neighbor cache entry may overwrite an old neighbor cache entry. Especially when being subject to a packet flood attack, the node establishes a large quantity of neighbor cache entries. As a result, neighbor cache entries used by some services are overwritten by neighbor cache entries of an attack packet, and the node cannot obtain the neighbor cache entries of these services, causing service interruption.

The document US 2015/0058989 A1 shows a method for defending against denial-of-service attacks on IPv6 neighbor cache.

### SUMMARY

The present invention is defined by the independent claims. Further advantageous developments are shown by the dependent claims.

This application provides a flood attack defense method and a related apparatus, to avoid service interruption.

According to a first aspect, a flood attack defense method is provided. The method includes: A first node receives a first packet from a second node. The first packet includes a source IPv6 address of a data packet, and the source IPv6 address of the data packet is a next-hop address in a routing table or a forwarding table of the first node. The first node establishes a first neighbor cache entry. A destination IPv6 address included in the first neighbor cache entry is the source IPv6 address of the data packet. In other words, it can be learned that the second node may send the first packet to the first node, and the source IPv6 address of the data packet that is included in the first packet is the next-hop address in the routing table or the forwarding table of the first node. Therefore, the first node may establish an entry corresponding to the first packet. In this case, in a flood attack scenario, when the source IPv6 address of the data packet in the first packet is the next-hop address in the routing table or the forwarding table of the first node, the first node may still establish the first neighbor cache entry. In this way, the first neighbor cache entry can be stored, and the first node can learn the neighbor cache entry and perform service forwarding by using learned information, to avoid service interruption.

Optionally, with reference to the first aspect, that the first node establishes a first neighbor cache entry includes: The first node preferentially overwrites a second neighbor cache entry with the first neighbor cache entry. A destination IPv6 address included in the second neighbor cache entry is not the next-hop address in the routing table or the forwarding table of the first node. In other words, it can be learned that the first node may preferentially overwrite the second neighbor cache entry in which a destination IPv6 address is not the next-hop address in the routing table or the forwarding table of the first node with the first neighbor cache entry. In this way, the first neighbor cache entry can be stored in the flood attack scenario, and the first node can learn the neighbor cache entry and perform service forwarding by using the learned information, to avoid the service interruption.

Optionally, with reference to the first aspect, a first area that is in the first node and that stores a neighbor cache entry is fully occupied. The first area is a neighbor cache table. The neighbor cache entry in the first area includes a destination IPv6 address. The second neighbor cache entry is included in the first area. That the first node preferentially overwrites a second neighbor cache entry with the first neighbor cache entry includes: The first node changes the second neighbor cache entry to the first neighbor cache entry. In other words, it can be learned that in the flood attack scenario, when the first area is fully occupied, the first node changes the second neighbor cache entry in which the destination IPv6 address is not the next-hop address in the routing table or the forwarding table of the first node to the first neighbor cache entry. In this way, the first neighbor cache entry can be stored, and the first node can learn the neighbor cache entry and perform service forwarding by using the learned information, to avoid the service interruption.

Optionally, with reference to the first aspect, the neighbor cache entry in the first area further includes aging time, and the second neighbor cache entry is a neighbor cache entry in which aging time is the shortest in the first area. In other words, it can be learned that in the flood attack scenario, when the first area is fully occupied, the first node changes the second neighbor cache entry in which a target IPv6 address is not the next-hop address in the routing table or the forwarding table of the first node and in which aging time is the shortest to the first neighbor cache entry. In this way, the first neighbor cache entry can be stored, and the first node can learn the neighbor cache entry and perform service forwarding by using the learned information, to avoid the service interruption.

Optionally, with reference to the first aspect, a second area that is in the first node and that stores a neighbor cache entry is fully occupied. The second area is a neighbor cache table. The neighbor cache entry in the second area includes priority information and a destination IPv6 address. The second neighbor cache entry is included in the second area. That the first node preferentially overwrites a second neighbor cache entry with the first neighbor cache entry includes: The first node changes the second neighbor cache entry to the first neighbor cache entry. Priority information included in the second neighbor cache entry is lower than priority information included in a third neighbor cache entry in the second area, and a destination IPv6 address included in the third neighbor cache entry is the next-hop address in the routing table or the forwarding table of the first node. In other words, it can be learned that in the flood attack scenario, when the second area is fully occupied, the first node changes the second neighbor cache entry in which the priority information is lower than that of the third neighbor cache entry to the first neighbor cache entry. In this way, the first neighbor cache entry can be stored, and the first node can learn the neighbor cache entry and perform service forwarding by using the learned information, to avoid the service interruption.

Optionally, with reference to the first aspect, the neighbor cache entry in the second area further includes aging time, and the second neighbor cache entry is a neighbor cache entry in which aging time is the shortest in the second area. In other words, it can be learned that in the flood attack scenario, when the second area is fully occupied, the first node changes the second neighbor cache entry in which the priority information is lower than that of the third neighbor cache entry and in which aging time is the shortest to the first neighbor cache entry. In this way, the first neighbor cache entry can be stored, and the first node can learn the neighbor cache entry and perform service forwarding by using the learned information, to avoid the service interruption.

Optionally, with reference to the first aspect, areas in the first node that store a neighbor cache entry include a third area and a fourth area. The third area and the fourth area are neighbor cache tables. A destination IPv6 address included in a neighbor cache entry in the third area is the next-hop address in the routing table or the forwarding table of the first node. A destination IPv6 address included in a neighbor cache entry in the fourth area is not the next-hop address in the routing table or the forwarding table of the first node. The fourth area is fully occupied. That the first node establishes the neighbor cache entry includes: The first node establishes the first neighbor cache entry in the third area. In other words, it can be learned that in the flood attack scenario, when the fourth area is fully occupied, the first node may still establish the first neighbor cache entry in the third area. In this way, the first neighbor cache entry can be stored, and the first node can learn the neighbor cache entry and perform service forwarding by using the learned information, to avoid the service interruption.

Optionally, with reference to the first aspect, that the first node establishes the first neighbor cache entry in the third area includes: The first node determines whether a fourth neighbor cache entry exists in the third area. AMAC address included in the fourth neighbor cache entry is an invalid value, and a destination IPv6 address included in the fourth neighbor cache entry is the source IPv6 address of the data packet. If the fourth neighbor cache entry exists, the first node changes the fourth neighbor cache entry to the first neighbor cache entry; or if the fourth neighbor cache entry does not exist, the first node establishes the first neighbor cache entry in the third area. In other words, it can be learned that in the flood attack scenario, the first node may still establish the first neighbor cache entry in the third area. In this way, the first neighbor cache entry can be stored, and the first node can learn the neighbor cache entry and perform service forwarding by using the learned information, to avoid the service interruption.

According to a second aspect, a flood attack defense method is provided. The method includes: A first node obtains a first IPv6 address corresponding to a first packet. The first node searches a first area for a media access control MAC address corresponding to the first IPv6 address. The first area is a neighbor cache table. If the MAC address corresponding to the first IPv6 address is not found in the first area, the first node obtains, from a second area based on identification information of a first interface, the MAC address corresponding to the first IPv6 address. The first interface is an outbound interface of the first packet. The outbound interface is an Ethernet main interface or virtual local area network VLAN sub-interface, or the outbound interface is an Eth-trunk main interface or VLAN sub-interface. The second area includes a correspondence between identification information of an interface and a MAC address. The first node sends the first packet based on the MAC address corresponding to the first IPv6 address. In other words, it can be learned that when the first node does not find, in the neighbor cache table, the MAC address corresponding to the first IPv6 address, the first node may obtain, from the second area based on the identification information of the outbound interface of the first packet, the MAC address corresponding to the first IPv6 address. In this way, the first node may send the first packet based on the MAC address corresponding to the first IPv6 address, to avoid a problem in which service interruption is caused because a MAC address cannot be learned from the neighbor cache table.

Optionally, with reference to the second aspect, the first packet includes a source IPv6 address and a destination IPv6 address. If the source IPv6 address and the destination IPv6 address are addresses in different network segments, the first IPv6 address is a next-hop address obtained by the first node from a routing table or a forwarding table of the first node based on the first packet. If the source IPv6 address and the destination IPv6 address are addresses in a same network segment, the first IPv6 address is the destination IPv6 address. In other words, it can be learned that whether the source IPv6 address and the destination IPv6 address are the addresses in the same network segment is determined, to determine first IPv6 addresses in different networking scenarios.

Optionally, with reference to the second aspect, before that the first node obtains, from a second area based on identification information of a first interface, the MAC address corresponding to the first IPv6 address, the method further includes: The first node obtains a route advertisement (router advertisement, RA) packet or a dynamic host configuration protocol (dynamic host configuration protocol, DHCP) packet from the first interface. The RA packet or the DHCP packet includes a source MAC address of a data packet. The first node establishes, in the second area, a correspondence between the identification information of the first interface and the source MAC address based on the identification information of the first interface and the source MAC address. In other words, it can be learned that the first node obtains the RA packet or the DHCP packet from the first interface, and the first node may establish, in the second area, the correspondence between the identification information of the first interface and the source MAC address of the data packet based on the identification information of the first interface and the source MAC address included in the RA packet or the DHCP packet. In this way, the correspondence between the identification information of the first interface and the source MAC address can be stored in a flood attack scenario, and the first node can learn the MAC address based on the correspondence between the identification information of the first interface and the source MAC address, and perform service forwarding by using the learned MAC address, to avoid service interruption.

Optionally, with reference to the second aspect, that the first node obtains an RA packet from the first interface includes: If an RA packet sent by one router node is received from the first interface, the first node determines the RA packet sent by the router node as the RA packet; or if RA packets sent by a plurality of router nodes are received from the first interface, the first node determines a high-priority RA packet in the RA packets sent by the plurality of router nodes as the RA packet. In other words, it can be learned that when the first node receives the RA packet sent by one or more router nodes, the first node selects a corresponding RA packet in different cases, to prepare for subsequently establishing, in the second area, the correspondence between the identification information of the first interface and the source MAC address.

Optionally, with reference to the second aspect, the method further includes: The first node sends a second packet. The second packet is used to request the MAC address corresponding to the first IPv6 address. The first node receives a third packet. The third packet includes the MAC address corresponding to the first IPv6 address. That the first node obtains, from a second area based on identification information of a first interface, the MAC address corresponding to the first IPv6 address includes: If a neighbor cache entry cannot be established in the first area based on the third packet, the first node determines, from the second area, identification information that is of a target interface and that matches the identification information of the first interface. The first node obtains, based on the correspondence included in the second area, a MAC address corresponding to the identification information of the target interface, and uses the address as the MAC address corresponding to the first IPv6 address. In other words, it can be learned that only when the first node cannot establish the neighbor cache entry based on the third packet, the first node chooses to determine, from the second area, the identification information that is of the target interface and that matches the identification information of the first interface. In this way, the MAC address corresponding to the identification information of the target interface is learned based on the correspondence included in the second area, and service forwarding can be performed by using the learned MAC address, to avoid the service interruption.

According to a third aspect, a communication apparatus is provided. The communication apparatus is a first node. The first node includes a transceiver module and a processing module. The transceiver module is configured to receive a first packet from a second node. The first packet includes a source internet protocol version 6 IPv6 address of a data packet, and the source IPv6 address of the data packet is a next-hop address in a routing table or a forwarding table of the first node. The processing module is configured to establish a first neighbor cache entry. A destination IPv6 address included in the first neighbor cache entry is the source IPv6 address of the data packet.

Optionally, with reference to the third aspect, when the first node establishes the first neighbor cache entry, the processing module is configured to preferentially overwrite a second neighbor cache entry with the first neighbor cache entry. A destination IPv6 address included in the second neighbor cache entry is not the next-hop address in the routing table or the forwarding table of the first node.

Optionally, with reference to the third aspect, a first area that is in the first node and that stores a neighbor cache entry is fully occupied. The first area is a neighbor cache table. The neighbor cache entry in the first area includes a destination IPv6 address. The second neighbor cache entry is included in the first area. When preferentially overwriting the second neighbor cache entry with the first neighbor cache entry, the processing module is configured to change the second neighbor cache entry to the first neighbor cache entry.

Optionally, with reference to the third aspect, the neighbor cache entry in the first area further includes aging time, and the second neighbor cache entry is a neighbor cache entry in which aging time is the shortest in the first area.

Optionally, with reference to the third aspect, a second area that is in the first node and that stores a neighbor cache entry is fully occupied. The second area is a neighbor cache table. The neighbor cache entry in the second area includes priority information and a destination IPv6 address. The second neighbor cache entry is included in the second area. When preferentially overwriting the second neighbor cache entry with the first neighbor cache entry, the processing module is configured to change the second neighbor cache entry to the first neighbor cache entry. Priority information included in the second neighbor cache entry is lower than priority information included in a third neighbor cache entry in the second area, and a destination IPv6 address included in the third neighbor cache entry is the next-hop address in the routing table or the forwarding table of the first node.

Optionally, with reference to the third aspect, the neighbor cache entry in the second area further includes aging time, and the second neighbor cache entry is a neighbor cache entry in which aging time is the shortest in the second area.

Optionally, with reference to the third aspect, areas in the first node that store a neighbor cache entry include a third area and a fourth area. The third area and the fourth area are neighbor cache tables. A destination IPv6 address included in a neighbor cache entry in the third area is the next-hop address in the routing table or the forwarding table of the first node. A destination IPv6 address included in a neighbor cache entry in the fourth area is not the next-hop address in the routing table or the forwarding table of the first node. The fourth area is fully occupied. When the first node establishes the neighbor cache entry, the processing module is configured to establish the first neighbor cache entry in the third area.

Optionally, with reference to the third aspect, when establishing the first neighbor cache entry in the third area, the processing module is configured to: determine whether a fourth neighbor cache entry exists in the third area, where a MAC address included in the fourth neighbor cache entry is an invalid value, and a destination IPv6 address included in the fourth neighbor cache entry is the source IPv6 address of the data packet, and if the fourth neighbor cache entry exists, change the fourth neighbor cache entry to the first neighbor cache entry; or if the fourth neighbor cache entry does not exist, establish the first neighbor cache entry in the third area.

According to a fourth aspect, a communication apparatus is provided. The communication apparatus is a first node, and the first node includes a transceiver module and a processing module. The processing module is configured to obtain a first IPv6 address corresponding to a first packet. The processing module is further configured to search a first area for a media access control MAC address corresponding to the first IPv6 address. The first area is a neighbor cache table. If the MAC address corresponding to the first IPv6 address is not found in the first area, the processing module is further configured to obtain, from a second area based on identification information of a first interface, the MAC address corresponding to the first IPv6 address. The first interface is an outbound interface of the first packet. The outbound interface is an Ethernet main interface or virtual local area network VLAN sub-interface, or the outbound interface is an Eth-trunk main interface or VLAN sub-interface. The second area includes a correspondence between identification information of an interface and a MAC address. The transceiver module is configured to send the first packet based on the MAC address corresponding to the first IPv6 address.

Optionally, with reference to the fourth aspect, the first packet includes a source IPv6 address and a destination IPv6 address. If the source IPv6 address and the destination IPv6 address are addresses in different network segments, the first IPv6 address is a next-hop address obtained by the first node from a routing table or a forwarding table of the first node based on the first packet. If the source IPv6 address and the destination IPv6 address are addresses in a same network segment, the first IPv6 address is the destination IPv6 address.

Optionally, with reference to the fourth aspect, the transceiver module is further configured to obtain a router advertisement RA packet or a dynamic host configuration protocol DHCP packet from the first interface. The RA packet or the DHCP packet includes a source MAC address of a data packet. The processing module is further configured to establish, in the second area, a correspondence between the identification information of the first interface and the source MAC address based on the identification information of the first interface and the source MAC address.

Optionally, with reference to the fourth aspect, when the RA packet is obtained from the first interface, if the processing module receives, from the first interface by using the transceiver module, an RA packet sent by one router node, the processing module is configured to determine the RA packet sent by the router node as the RA packet; or if the processing module receives, from the first interface by using the transceiver module, RA packets sent by a plurality of router nodes, the processing module is configured to determine a high-priority RA packet in the RA packets sent by the plurality of router nodes as the RA packet.

Optionally, with reference to the fourth aspect, the transceiver module is further configured to send a second packet. The second packet is used to request a MAC address corresponding to the first IPv6 address. The transceiver module is further configured to receive a third packet. The third packet includes the MAC address corresponding to the first IPv6 address. When obtaining, from the second area based on the identification information of the first interface, the MAC address corresponding to the first IPv6 address, the processing module is further configured to: if a neighbor cache entry cannot be established in the first area based on the third packet, determine, from the second area, identification information that is of the target interface and that matches the identification information of the first interface; and obtain, based on the correspondence included in the second area, a MAC address corresponding to the identification information of the target interface, and use the address as the MAC address corresponding to the first IPv6 address.

According to a fifth aspect, a communication apparatus is provided. The communication apparatus includes a processor and a memory. The processor invokes a computer program stored in the memory to implement the method according to either of the first aspect or the second aspect.

In a possible design, the communication apparatus may be a chip or a device including a chip that implements the method according to the first aspect or the second aspect.

According to a sixth aspect, a computer-readable storage medium is provided. The computer-readable storage medium stores a computer program. When the computer program is run, the method according to either of the first aspect or the second aspect is implemented.

According to a seventh aspect, a computer program product including instructions is provided. When the instructions are executed on a computer, the method according to either of the first aspect or the second aspect is performed.

According to an eighth aspect, a communication system is provided. The communication system includes one or more of the following: the first node and the second node.

### BRIEF DESCRIPTION OF DRAWINGS

The following briefly describes accompanying drawings used in describing embodiments.
FIG. 1 shows a basic architecture of a communication system according to an embodiment of this application;
FIG. 2 shows a basic architecture of another communication system according to an embodiment of this application;
FIG. 3 is a schematic flowchart of a flood attack defense method according to an embodiment of this application;
FIG. 4 is a schematic flowchart of another flood attack defense method according to an embodiment of this application; and
FIG. 5 is a schematic of a structure of a communication apparatus according to an embodiment of this application.

### DESCRIPTION OF EMBODIMENTS

The following describes the technical solutions provided in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions of embodiments of this application, terms such as "first" and "second" are used in embodiments of this application to distinguish between same items or similar items that provide basically same network elements or functions. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In the following specific implementations, objectives, technical solutions, and beneficial effects of this application are further described in detail. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following describes some terms involved in this application. It may be understood that when the following nouns are involved in another part of this application, no explanation or description is provided subsequently.

### 1. Neighbor discovery (neighbor discovery, ND)

An ND protocol replaces and improves an internet protocol version 4 (internet protocol version 4, IPv4) address resolution protocol (address resolution protocol, ARP) message, an internet control message protocol router discovery (internet control message protocol router discovery, ICMP Router Discovery) message, and an internet control message protocol redirect (internet control message protocol redirect) message. Specifically, functions provided by the ND protocol include: address resolution, stateless address auto-configuration, and route redirection. The address resolution function is used to determine a MAC address of a target node, to implement interworking between a layer 3 network and a layer 2 network.

In the ND protocol, a neighbor solicitation (neighbor solicitation, NS) packet and a neighbor advertisement (neighbor advertisement, NA) packet are exchanged between nodes to parse an IPv6 address to obtain a media access control (media access control, MAC) address. Information including the MAC address obtained through parsing, the IPv6 address, and the like is used to establish a neighbor cache entry in a neighbor cache table.

For example, a first node sends an NS packet to a second node. The NS packet includes an IPv6 address of the first node, a MAC address of the first node, and a multicast address corresponding to the second node. After the second node receives the NS packet, the second node processes the NS packet based on the multicast address included in the NS packet. For example, the second node may first determine whether the multicast address is a multicast address corresponding to the second node. If the multicast address is the multicast address corresponding to the second node, the second node updates a neighbor cache table of the second node based on the IPv6 address of the first node and the MAC address of the first node that are included in the NS packet. In other words, the second node may establish a neighbor cache entry in the neighbor cache table based on the IPv6 address of the first node and the MAC address of the first node that are included in the NS packet.

It may be understood that, according to the ND protocol, when receiving the NS packet, the second node needs to provide a feedback for the NS packet. In other words, the second node needs to send an NA packet to the second node that sends the NS packet. The NA packet includes an IPv6 address and a MAC address that are of the second node. After receiving the NA packet, the second node may update a neighbor cache table of the second node based on the IPv6 address and the MAC address that are of the second node and that are included in the NA packet. In other words, the first node may establish a neighbor cache entry in the neighbor cache table based on the IPv6 address and the MAC address that are of the second node and that are included in the NA packet. In this way, the first node and the second node learn the MAC addresses of each other, and therefore may communicate with each other.

### 2. Neighbor cache table

The neighbor cache table is used to store a neighbor cache entry. The neighbor cache table may include one or more neighbor cache entries. This is not limited herein.

Optionally, the neighbor cache entry in the neighbor cache table may be implemented in either of the following manners. This is not limited herein.

Manner 1.1: The neighbor cache entry is implemented by using a destination IPv6 address, a MAC address, a state, and aging time. In other words, the neighbor cache entry in the neighbor cache table includes the destination IPv6 address, the MAC address, the state, and the aging time. It may be understood that, the neighbor cache entry in the neighbor cache table may further include a correspondence between the destination IPv6 address, the MAC address, the state, and the aging time.

Manner 1.2: The neighbor cache entry is implemented by using a destination IPv6 address, a MAC address, a state, aging time, and priority information. In other words, the neighbor cache entry in the neighbor cache table includes the destination IPv6 address, the MAC address, the state, the aging time, and the priority information. It may be understood that the neighbor cache entry in the neighbor cache table may further include a correspondence between the destination IPv6 address, the MAC address, the state, the aging time, and the priority information.

The destination IPv6 address in the neighbor cache table may be a next-hop address in a routing table or a forwarding table of the first node, and/or, the destination IPv6 address in the neighbor cache table is not the next-hop address in the routing table or the forwarding table of the first node. This is not limited herein. In this application, the routing table may be referred to as a routing information base (routing information base, RIB), and the forwarding table may be referred to as a forwarding information base (forwarding information base, FIB). It may be understood that the first node may dynamically configure the next-hop address in the routing table or the forwarding table of the first node. In other words, the next-hop address in the routing table or the forwarding table of the first node may be dynamically adjusted. For example, at a first moment, a destination IPv6 address included in a neighbor cache entry A is not the next-hop address in the routing table or the forwarding table of the first node. At a second moment, the first node re-adjusts the next-hop address in the routing table or the forwarding table of the first node. In this case, the destination IPv6 address included in the neighbor cache entry A changes to the next-hop address in the routing table or the forwarding table of the first node. The first moment is earlier than the second moment.

The state may include one of the following: an incomplete (Incomplete) state, a reachable (Reachable) state, a stale (Stale) state, a delay (Delay) state, a probe (Probe) state, and an empty (Empty) state. It may be understood that different nodes may manage states of the nodes by using neighbor cache entries. For example, when the first node communicates with the second node, the first node actively initiates learning of a neighbor cache entry, and performs a state migration on the neighbor cache entry based on triggering of a packet and a feedback of the second node. Specifically, a state included in the neighbor cache entry may change from the incomplete state to the reachable state, from the reachable state to the empty state, or the like. Examples are not listed one by one herein. It may be understood that, if the state included in the neighbor cache entry changes from the incomplete state to the reachable state, it indicates that both the nodes have learned MAC addresses of each other. In this case, the two nodes may communicate with each other. If the state included in the neighbor cache entry changes from the reachable state to the empty state, it indicates that the neighbor cache entry is to be deleted.

A function of setting the aging time is: When a packet for updating a specific neighbor cache entry is not received within specified aging time, the neighbor cache entry is deleted. In other words, the neighbor cache entry is aged.

It should be noted that, when an IPv6 address included in the neighbor cache entry is the next-hop address in the routing table or the forwarding table of the first node, priority information included in the neighbor cache entry is higher than priority information corresponding to a neighbor cache entry in which an IPv6 address is not the next-hop address in the routing table or the forwarding table of the first node.

For example, if the IPv6 address included in the neighbor cache entry A is the next-hop address in the routing table or the forwarding table of the first node, and an IPv6 address included in a neighbor cache entry B is not the next-hop address in the routing table or the forwarding table of the first node, priority information included in the neighbor cache entry A is higher than priority information included in the neighbor cache entry B.

3. A router advertisement (router advertisement, RA) packet and a dynamic host configuration protocol (dynamic host configuration protocol, DHCP) packet may be used to configure an IPv6 address.

For example, a node A may send a router solicitation (router solicitation, RS) packet. The RS packet is used to request network prefix information. After receiving the RS packet, a router node may send an RA packet, where the RA packet may include the network prefix information. After receiving the RA packet, the node A may configure an IPv6 address based on the network prefix information included in the RA packet and identification information of an interface of the node A. The identification information of the interface may be identification information of an Ethernet main interface or virtual local area network (virtual local area network, VLAN) sub-interface, or the identification information of the interface may be identification information of an Eth-Trunk (TRUNK) main interface or VLAN sub-interface. This is not limited herein. For example, the identification information of the interface may be ETH_0/vlan 200, and ETH_0/vlan 200 indicates a VLAN sub-interface 200 of an Ethernet main interface 0.

The RA packet may be, for example, a packet sent by the router node. A source MAC address included in the RA packet may be, for example, a MAC address of the router node. The MAC address of the router node may be, for example, a MAC address corresponding to a next-hop address in a forwarding table of the node A. Therefore, in this application, after a correspondence between the source MAC address included in the RA packet and the identification information of the interface of the node A is established, when a specific packet is sent, the node A may learn, based on the correspondence and identification information of an interface corresponding to the packet, a MAC address corresponding to the packet.

In addition, the RA packet may further include priority information of the router node, to enable a specific node to send, based on the priority information of the router node, a packet to a high-priority router node. It may be understood that, in this application, the first node may receive an RA packet sent by one or more router nodes. If the first node receives an RA packet sent by one router node, the first node directly establishes, based on a source MAC address included in the RA packet and identification information of an interface corresponding to the RA packet, an entry corresponding to the RA packet. If the first node receives a plurality of RA packets sent by a plurality of router nodes, the first node selects, based on priority information included in each RA packet, a source MAC address included in a high-priority RA packet in the plurality of RA packets and identification information of an interface corresponding to the high-priority RA packet, and establishes an entry corresponding to the high-priority RA packet. It should be noted that, in this application, one router node may periodically send an RA packet, but one router node sends only one RA packet at one moment.

The dynamic host configuration protocol (dynamic host configuration protocol, DHCP) packet may be a DHCP response packet. The DHCP response packet may be a dynamic host configuration protocol for IPv6 (dynamic host configuration protocol for IPv6, DHCPv6) response packet. For example, the node A obtains an IPv6 address included in the DHCPv6 response packet to configure the IPv6 address. It may be understood that, in an IPv6 scenario, the DHCP packet needs to be sent, through the router node, a node in which the IPv6 address needs to be configured. Therefore, after the DHCP packet passes through the router node, a source MAC address included in the DHCP packet is changed to the MAC address of the router node. The MAC address of the router node may be, for example, the MAC address corresponding to the next-hop address in the forwarding table of the node A. Further, in this application, after a correspondence between the source MAC address included in the DHCP packet and the identification information of the interface of the node A is established, when a specific packet is sent, the node A may learn, based on the correspondence and identification information of an interface corresponding to the packet, a MAC address corresponding to the packet.

In addition, the RA packet or the DHCP packet may further include at least one of the following: a source IPv6 address, the destination IPv6 address, a destination MAC address, and the like. This is not limited in this application.

It should be understood that the technical solutions of embodiments of this application may be applied to a long term evolution (long term evolution, LTE) architecture, a 5th generation (5th generation, 5G) mobile communication technology, and the like. The technical solutions of embodiments of this application may be further applied to another future communication system, for example, a 6G communication system. In the future communication system, a same function may be maintained, but a name may be changed.

The following describes a basic architecture of a communication system provided in embodiments of this application.

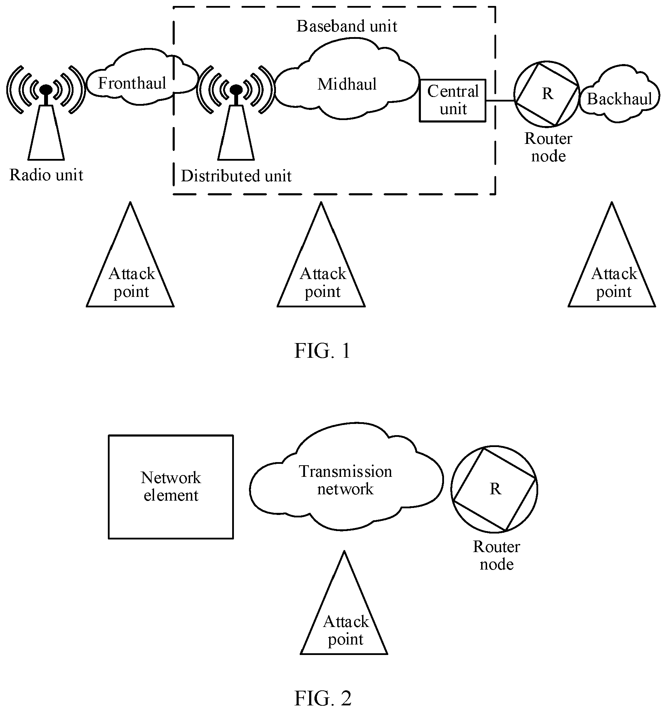

FIG. 1 shows a basic architecture of a communication system according to an embodiment of this application. As shown in FIG. 1, the communication system may include a central unit (central unit, CU), a distributed unit (Distributed Unit, DU), a radio unit (radio unit, RU), and a router node. FIG. 1 is merely a schematic, and does not constitute a limitation on a scenario to which the technical solutions provided in this application are applicable.

The DU and the CU in FIG. 1 may be separately deployed, or integrated into a baseband unit (baseband unit, BBU). This is not limited herein. When the DU and the CU are integrated into the BBU, midhaul (Midhaul) is not included in FIG. 1.

In this application, the router node may be a layer 3 switch.

In addition, with reference to FIG. 1, it can be learned that an attack point of a flood attack may occur in fronthaul (Fronthaul), midhaul (Midhaul), or backhaul (Backhaul). Therefore, in scenarios such as the fronthaul, the midhaul, and the backhaul, a case in which a neighbor cache entry used by some services is overwritten by a neighbor cache entry of an attack packet may occur. In other words, in the scenarios such as the fronthaul, the midhaul, and the backhaul, a first node may be the CU, the DU, the RU, or the router node shown in FIG. 1. This is not limited herein. Certainly, when the DU and the RU are integrated into the BBU, the first node may be the BBU.

FIG. 2 shows a basic architecture of another communication system according to an embodiment of this application. As shown in FIG. 2, the communication system may include a network element and a router node. FIG. 2 is merely a schematic, and does not constitute a limitation on a scenario to which the technical solutions provided in this application are applicable.

The network element may be, for example, a core network device, a security gateway, a host node, or a telecommunications device. This is not limited herein. The core network device may be, for example, a network element included in a data network (data network, DN) in a 5G network architecture, or a network element included in an operator network in a 5G network architecture. The telecommunications device may be, for example, a charging gateway, a domain name system (domain name system, DNS), or a content delivery network (content delivery network, CDN). This is not limited herein.

In addition, with reference to FIG. 2, it can be learned that an attack point of a flood attack may occur in a transmission network between the network element and the router node. Therefore, in this scenario, a first node may be the network element or the router node shown in FIG. 2. This is not limited herein.

It should be noted that, in this application, a second node is another node that communicates with the first node. A specific type is not limited herein.

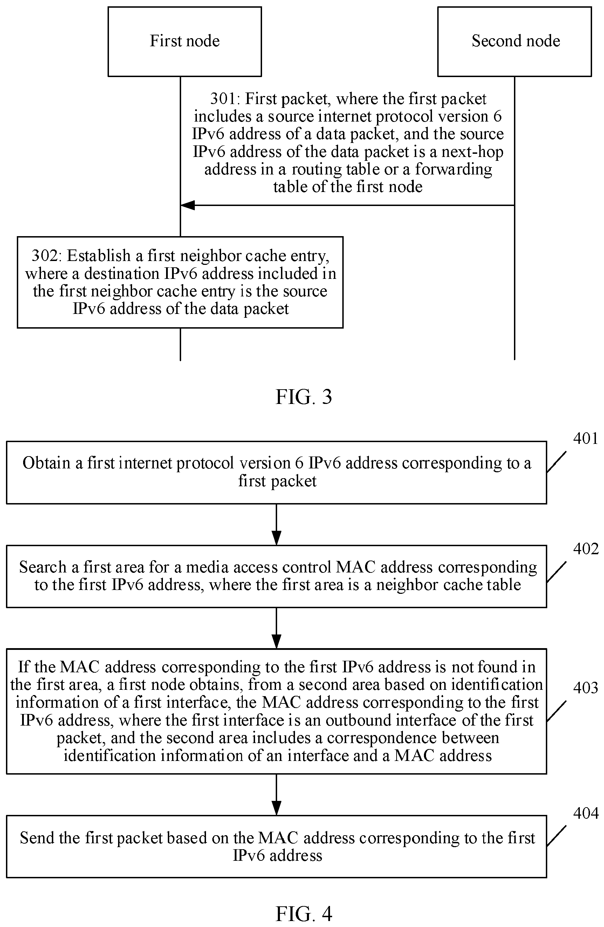

The following describes the technical solutions provided in embodiments of this application with reference to the accompanying drawings. It should be understood that in this application, mainly two solutions are used to avoid service interruption. Solution 1: When a source IPv6 address of a data packet included in an NS packet or an NA packet is a next-hop address in a routing table or a forwarding table of a first node, a neighbor cache entry is established. In this way, the established neighbor cache entry can be stored, and the first node can learn the neighbor cache entry, and perform service forwarding by using the learned information, for example, perform service forwarding by using a learned MAC address, to avoid the service interruption. For details, refer to FIG. 3. Solution 2: When a MAC address corresponding to an IPv6 address is not found in a neighbor cache table, the MAC address corresponding to the IPv6 address may be obtained based on identification information of an outbound interface. Therefore, service forwarding may be performed based on the MAC address corresponding to the IPv6 address, to avoid the service interruption. For details, refer to FIG. 4.

FIG. 3 is a schematic flowchart of a flood attack defense method according to an embodiment of this application. As shown in FIG. 3, the method includes but is not limited to the following steps.

301: A second node sends a first packet to a first node. The first packet includes a source IPv6 address of a data packet. The source IPv6 address of the data packet is a next-hop address in a routing table or a forwarding table of the first node.

Correspondingly, the first node receives the first packet from the second node. For example, the first node receives the first packet from the second node through a first interface. The first interface is an Ethernet main interface or virtual local area network VLAN sub-interface, or the first interface is an Eth-trunk main interface or VLAN sub-interface. It should be understood that the first node may include a plurality of interfaces, and the plurality of interfaces may include the first interface. For a specific manner in which the first node establishes a neighbor cache entry when receiving an NS packet or an NA packet through an interface other than the first interface in the plurality of interfaces, refer to a process in which the first node establishes the neighbor cache entry when receiving the NS packet or the NA packet through the first interface. Details are not described herein.

Optionally, the first packet may be the NS packet or the NA packet. This is not limited herein. The NS packet or the NA packet may further include at least one of the following: a source MAC address of the data packet, a destination IPv6 address of the data packet, a destination MAC address of the data packet, and the like. This is not limited herein.

For the routing table and the forwarding table, refer to the foregoing related descriptions. Details are not described herein again.

302: The first node establishes a first neighbor cache entry. A destination IPv6 address included in the first neighbor cache entry is the source IPv6 address of the data packet.

Optionally, the first neighbor cache entry may further include at least one of the following: a MAC address, a state, and aging time. The MAC address included in the first neighbor cache entry is the source MAC address of the data packet. The first neighbor cache entry may further include a correspondence between the destination IPv6 address and one or more of the MAC address, the state, and the aging time. For the state, refer to the foregoing related descriptions. Details are not described herein again. In addition, the first neighbor cache entry may further include priority information. It may be understood that the first neighbor cache entry may further include a correspondence between the destination IPv6 address and one or more of the MAC address, the state, the aging time, and the priority information.

The first neighbor cache entry may be stored in one area that stores an entry and that is of the first interface. One area is one neighbor cache table, and one neighbor cache table may include one or more neighbor cache entries. It may be understood that the neighbor cache table may be implemented in the foregoing manner 1.1 or manner 1.2. In addition, one neighbor cache table, for example, a third area, may include neighbor cache entries in which destination IPv6 addresses are next-hop addresses in the routing table or the forwarding table of the first node. Alternatively, one neighbor cache table, for example, a fourth area, may include neighbor cache entries in which destination IPv6 addresses are not next-hop addresses in the routing table or the forwarding table of the first node. Alternatively, one neighbor cache table, for example, a first area or a second area, may include both a neighbor cache entry in which a destination IPv6 address is the next-hop address in the routing table or the forwarding table of the first node and a neighbor cache entry in which a destination IPv6 address is not the next-hop address in the routing table or the forwarding table of the first node.

For example, when the neighbor cache table of the first node includes the destination IPv6 address, the MAC address, the state, and the aging time, and the neighbor cache table includes the neighbor cache entries in which the destination IPv6 addresses are the next-hop addresses in the routing table or the forwarding table of the first node, refer to Table 1. Table 1 is a neighbor cache table of the first node according to an embodiment of this application. With reference to Table 1, it can be learned that the neighbor cache table includes a neighbor cache entry in which a destination IPv6 address is 2222::1111 and a neighbor cache entry in which a destination IPv6 address is 2431::2331. Both 2222::1111 and 2431::2331 are next-hop addresses in the routing table or the forwarding table of the first node. In addition, the neighbor cache entry in which the destination IPv6 address is 2222::1111 and the neighbor cache entry in which the destination IPv6 address is 2431::2331 further include MAC addresses, states, and aging time. For example, the MAC address included in the neighbor cache entry in which the destination IPv6 address is 2222::1111 is XX:XX:XX:XX:XX:XX. This indicates that the MAC address is a valid value. In other words, the MAC address included in the neighbor cache entry in which the destination IPv6 address is 2222::1111 is a MAC address of a node that communicates with the first node, that is, the first node has learned the neighbor cache entry. The MAC address included in the neighbor cache entry in which the destination IPv6 address is 2431::2331 is 00:00:00:00:00:00. This indicates that the MAC address is an invalid value. In other words, in this case, the first node does not learn the MAC address of the node that communicates with the first node, that is, the first node does not learn the neighbor cache entry. The state included in the neighbor cache entry in which the destination IPv6 address is 2222::1111 is a reachable state. This indicates that the first node and the node that communicates with the first node have learned the MAC addresses of each other. The state included in the neighbor cache entry in which the destination IPv6 address is 2431::2331 is an incomplete state. This indicates that the first node does not learn the MAC address of the node that communicates with the first node, and the node that communicates with the first node does not learn the MAC address of the first node. In addition, the aging time included in the neighbor cache entry in which the destination IPv6 address is 2222::1111 is 5 minutes, and the aging time included in the neighbor cache entry in which the destination IPv6 address is 2431::2331 is NULL.

It should be noted that, when configuring the neighbor cache entry of the next-hop address in the routing table or the forwarding table, the first node may configure a neighbor cache entry in which the MAC address is an invalid value, or may not configure a neighbor cache entry in which the MAC address is an invalid value. This is not limited herein. It should be understood that, when the first node configures the neighbor cache entry in which the MAC address is the invalid value, subsequently, the first node may preferentially overwrite the neighbor cache entry in which the MAC address is the invalid value after a neighbor cache entry is learned. When the first node does not configure the neighbor cache entry in which the MAC address is the invalid value, subsequently, the first node may establish a new neighbor cache entry after a neighbor cache entry is learned.

**Table 1**

| Destination IPv6 address | MAC address | State | Aging time (minutes) |
|---|---|---|---|
| 2222::1111 | XX:XX:XX:XX:XX:XX | Reachable | 5 |
| 2431::2331 | 00:00:00: 00:00:00 | Incomplete | NULL |

For another example, when the neighbor cache table of the first node includes the destination IPv6 address, the MAC address, the state, and the aging time, and the neighbor cache table includes the neighbor cache entries in which the destination IPv6 addresses are not the next-hop addresses in the routing table or the forwarding table of the first node, refer to Table 2. Table 2 is another neighbor cache table of the first node according to an embodiment of this application. With reference to Table 2, it can be learned that the neighbor cache table includes a neighbor cache entry in which a destination IPv6 address is 2000::1000 and a neighbor cache entry in which a destination IPv6 address is 2001::2000. 2000::1000 or 2001::2000 are not the next-hop addresses in the routing table or the forwarding table of the first node. In addition, the neighbor cache entry in which a destination IPv6 address is 2000::1000 and the neighbor cache entry in which a destination IPv6 address is 2001::2000 further include MAC addresses, states, and aging time. For example, the MAC addresses included in the neighbor cache entry in which the destination IPv6 address is 2000::1000 and the neighbor cache entry in which the destination IPv6 address is 2001::2000 are XX:XX:XX:XX:XX:XX. This indicates that the MAC addresses are valid values. In other words, the first node has learned the neighbor cache entry. The states included in the neighbor cache entry in which the destination IPv6 address is 2000::1000 and the neighbor cache entry in which the destination IPv6 address is 2001::2000 are both reachable states. This indicates that the first node and a node that communicates with the first node have learned MAC addresses of each other. In addition, the aging time included in the neighbor cache entry in which the destination IPv6 address is 2000::1000 is 8 minutes, and the aging time included in the neighbor cache entry in which the destination IPv6 address is 2001::2000 is 10 minutes.

**Table 2**

| Destination IPv6 address | MAC address | State | Aging time (minutes) |
|---|---|---|---|
| 2000::1000 | XX:XX:XX:XX:XX:XX | Reachable | 8 |
| 2001::2000 | XX:XX:XX:XX:XX:XX | Reachable | 10 |

For another example, when the neighbor cache table of the first node includes the destination IPv6 address, the MAC address, the state, the aging time, and the priority information, and the neighbor cache table includes both the neighbor cache entry in which the destination IPv6 address is the next-hop address in the routing table or the forwarding table of the first node and the neighbor cache entry in which the destination IPv6 address is not the next-hop address in the routing table or the forwarding table of the first node, refer to Table 3. Table 3 is another neighbor cache table of the first node according to an embodiment of this application. With reference to Table 3, it can be learned that the neighbor cache table includes a neighbor cache entry in which the destination IPv6 address is 2000::1000, a neighbor cache entry in which the destination IPv6 address is 2001::2000, a neighbor cache entry in which the destination IPv6 address is 2222:: 1111, and a neighbor cache entry in which the destination IPv6 address is 2431::2331. 2000::1000 and 2001::2000 are not next-hop addresses in the routing table or the forwarding table of the first node. 2222::1111 and 2431::2331 are both next-hop addresses in the routing table or the forwarding table of the first node. Priority information included in the neighbor cache entry in which the destination IPv6 address is 2000::1000 and the neighbor cache entry in which the destination IPv6 address is 2001::2000 is low. Priority information included in the neighbor cache entry in which the destination IPv6 address is 2222::1111 and the neighbor cache entry in which the destination IPv6 address is 2431::2331 is high. In other words, the priority information included in the neighbor cache entry in which a destination IPv6 address is the next-hop address in the routing table or the forwarding table of the first node is higher than the priority information included in the neighbor cache entry in which a destination IPv6 address is not the next-hop address in the routing table or the forwarding table of the first node. In addition, for other content in Table 3, refer to Table 1 and Table 2. Details are not described herein again.

**Table 3**

| Destination IPv6 address | MAC address | State | Aging time (minutes) | Priority information |
|---|---|---|---|---|
| 2000::1000 | XX:XX:XX:XX:XX:XX | Reachable | 8 | Low |
| 2001::2000 | XX:XX:XX:XX:XX:XX | Reachable | 10 | Low |
| 2222::1111 | XX:XX:XX:XX:XX:XX | Reachable | 5 | High |
| 2431::2331 | 00:00:00: 00:00:00 | Incomplete | NULL | High |

It should be noted that the first area, the second area, the third area, and the fourth area are all neighbor cache tables. The first area may be implemented in the foregoing manner 1.1 or manner 1.2. The second area may be implemented in the foregoing manner 1.2. The first area and the third area may be implemented in the foregoing manner 1.1 or manner 1.2. Any area in the fourth area may be implemented in the foregoing manner 1.1 or manner 1.2. In addition, in a possible implementation, the first neighbor cache entry may be stored in the first area that stores an entry and that is of the first interface. In another possible implementation, the first neighbor cache entry may be stored in the second area that stores an entry and that is of the first interface. In another possible implementation, the first neighbor cache entry may be stored in the third area that stores an entry and that is of the first interface. It should be understood that the third area and the fourth area are different areas that store an entry and that are of the first interface.

Optionally, step 302 may be implemented in either of the following manners. This is not limited herein.

Manner 2.1: The first node preferentially overwrites a second neighbor cache entry with the first neighbor cache entry. A destination IPv6 address included in the second neighbor cache entry is not the next-hop address in the routing table or the forwarding table of the first node. In other words, it can be learned that the first node may preferentially overwrite the second neighbor cache entry in which the destination IPv6 address is not the next-hop address in the routing table or the forwarding table of the first node with the first neighbor cache entry. In this way, the first neighbor cache entry can be stored in a flood attack scenario, and the first node can learn the neighbor cache entry and perform service forwarding by using the learned information, to avoid service interruption.

Manner 2.2: Areas in the first node that store a neighbor cache entry include the third area and the fourth area. The third area and the fourth area are neighbor cache tables. A destination IPv6 address included in a neighbor cache entry in the third area is the next-hop address in the routing table or the forwarding table of the first node. A destination IPv6 address included in a neighbor cache entry in the fourth area is not the next-hop address in the routing table or the forwarding table of the first node. The fourth area is fully occupied. The first node establishes the first neighbor cache entry in the third area. In other words, it can be learned that in a flood attack scenario, when the fourth area is fully occupied, the first node may still establish the first neighbor cache entry in the third area. In this way, the first neighbor cache entry can be stored, and the first node can learn the neighbor cache entry and perform service forwarding by using the learned information, to avoid service interruption.

The second neighbor cache entry may further include content in the foregoing manner 1.1 or manner 1.2 other than the destination IPv6 address. Details are not described herein again.

Optionally, the foregoing manner 2.1 may be implemented in either of the following manners. This is not limited herein.

Manner 3.1: The first area that is in the first node and that stores a neighbor cache entry is fully occupied. The first area is a neighbor cache table. The neighbor cache entry in the first area includes a destination IPv6 address. The second neighbor cache entry is included in the first area. The first node changes the second neighbor cache entry to the first neighbor cache entry. In other words, it can be learned that in the flood attack scenario, when the first area is fully occupied, the first node changes the second neighbor cache entry in which the destination IPv6 address is not the next-hop address in the routing table or the forwarding table of the first node to the first neighbor cache entry. In this way, the first neighbor cache entry can be stored, and the first node can learn the neighbor cache entry and perform service forwarding by using the learned information, to avoid the service interruption.

Manner 3.2: The second area that is in the first node and that stores a neighbor cache entry is fully occupied. The second area is a neighbor cache table. The neighbor cache entry in the second area includes priority information and a destination IPv6 address. The second neighbor cache entry is included in the second area. The first node changes the second neighbor cache entry to the first neighbor cache entry. Priority information included in the second neighbor cache entry is lower than priority information included in a third neighbor cache entry in the second area, and a destination IPv6 address included in the third neighbor cache entry is the next-hop address in the routing table or the forwarding table of the first node. In other words, it can be learned that in the flood attack scenario, when the second area is fully occupied, the first node changes the second neighbor cache entry in which the priority information is lower than that of the third neighbor cache entry to the first neighbor cache entry. In this way, the first neighbor cache entry can be stored, and the first node can learn the neighbor cache entry and perform service forwarding by using the learned information, to avoid the service interruption.

The first area is fully occupied, and this indicates that a quantity of neighbor cache entries that can be stored in the first area reaches a preset first maximum quantity. Similarly, the second area is fully occupied, and this indicates that a quantity of neighbor cache entries that can be stored in the second area reaches a preset second maximum quantity. The fourth area is fully occupied, and this indicates that a quantity of neighbor cache entries that can be stored in the fourth area reaches a preset third maximum quantity. The preset first maximum quantity, the preset second maximum quantity, and the preset third maximum quantity may be the same or different. This is not limited herein. In addition, the preset first maximum quantity, the preset second maximum quantity, and the preset third maximum quantity each may be a quantity, a fixed value, or the like predefined in a protocol. This is not limited herein.

Optionally, for the manner 3.1, the second neighbor cache entry may be a neighbor cache entry in which aging time is the shortest in the first area. In other words, it can be learned that in the flood attack scenario, when the first area is fully occupied, the first node changes the second neighbor cache entry in which the destination IPv6 address is not the next-hop address in the routing table or the forwarding table of the first node and in which aging time is the shortest to the first neighbor cache entry. In this way, the first neighbor cache entry can be stored, and the first node can learn the neighbor cache entry and perform service forwarding by using the learned information, to avoid the service interruption.

Optionally, for the manner 3.2, the second neighbor cache entry may be a neighbor cache entry in which aging time is the shortest in the second area. In other words, it can be learned that in the flood attack scenario, when the second area is fully occupied, the first node changes the second neighbor cache entry in which the priority information is lower than that of the third neighbor cache entry and in which aging time is the shortest to the first neighbor cache entry. In this way, the first neighbor cache entry can be stored, and the first node can learn the neighbor cache entry and perform service forwarding by using the learned information, to avoid the service interruption.

In addition, in this application, a neighbor cache entry in which priority information is low cannot overwrite a neighbor cache entry in which priority information is high. In other words, the neighbor cache entry in which a destination IPv6 address is not the next-hop address in the routing table or the forwarding table of the first node cannot overwrite the neighbor cache entry in which a destination IPv6 address is the next-hop address in the routing table or the forwarding table of the first node. At a specific moment, a destination IPv6 address in a neighbor cache entry is not the next-hop address in the routing table or the forwarding table of the first node. At another moment, the first node re-adjusts the next-hop address in the routing table or the forwarding table of the first node. In this case, the destination IPv6 address included in the neighbor cache entry changes to the next-hop address in the routing table or the forwarding table of the first node, and the first node may change priority information included in the neighbor cache entry. For example, at a first moment, a destination IPv6 address included in a neighbor cache entry A is not the next-hop address in the routing table or the forwarding table of the first node. At a second moment, the first node re-adjusts the next-hop address in the routing table or the forwarding table of the first node. In this case, the destination IPv6 address included in the neighbor cache entry A changes to the next-hop address in the routing table or the forwarding table of the first node. Therefore, at the second moment, the first node may change priority information included in the neighbor cache entry A. This is because the first node may dynamically configure the next-hop address in the routing table or the forwarding table of the first node. In other words, the next-hop address in the routing table or the forwarding table of the first node may be dynamically adjusted.

Optionally, for the manner 2.2, that the first node establishes the first neighbor cache entry in the third area includes: The first node determines whether a fourth neighbor cache entry exists in the third area. A MAC address included in the fourth neighbor cache entry is an invalid value, and a destination IPv6 address included in the fourth neighbor cache entry is the source IPv6 address of the data packet. If the fourth neighbor cache entry exists, the first node changes the fourth neighbor cache entry to the first neighbor cache entry; or if the fourth neighbor cache entry does not exist, the first node establishes the first neighbor cache entry in the third area. In other words, it can be learned that in the flood attack scenario, the first node may still establish the first neighbor cache entry in the third area. In this way, the first neighbor cache entry can be stored, and the first node can learn the neighbor cache entry and perform service forwarding by using the learned information, to avoid the service interruption.

The fourth neighbor cache entry may further include content in the foregoing manner 1.1 or manner 1.2 other than the MAC address. Details are not described herein again.

That a MAC address included in the fourth neighbor cache entry is an invalid value may be understood as: The MAC address included in the fourth neighbor cache entry is 0. In other words, the MAC address included in the fourth neighbor cache entry is a MAC address when the routing table or the forwarding table of the first node takes effect but a neighbor cache entry is not learned by the first node. That the routing table or the forwarding table of the first node takes effect may be understood as: When the first node configures a neighbor cache entry of the next-hop address in the routing table or the forwarding table, a neighbor cache entry in which a MAC address is an invalid address is configured.

In addition, the first node may dynamically configure the next-hop address in the routing table or the forwarding table of the first node. In other words, the next-hop address in the routing table or the forwarding table of the first node may be dynamically adjusted. Therefore, there may be a case in which the neighbor cache entry is migrated from the fourth area to the third area. For example, at the first moment, a destination IPv6 address included in a neighbor cache entry in the fourth area is not the next-hop address in the routing table or the forwarding table of the first node. At the second moment, the first node re-adjusts the next-hop address in the routing table or the forwarding table of the first node. In this case, the destination IPv6 address included in the neighbor cache entry in the fourth area changes to the next-hop address in the routing table or the forwarding table of the first node, and the first node may migrate the neighbor cache entry from the fourth area to the third area.

FIG. 4 is a schematic flowchart of another flood attack defense method according to an embodiment of this application. As shown in FIG. 4, the method includes but is not limited to the following steps.

401: A first node obtains a first IPv6 address corresponding to a first packet.

The first packet may be, for example, an NS packet, an NA packet, or another packet. This is not limited herein. The first packet may include at least one of the following: a source IPv6 address, a destination IPv6 address, a source MAC address, a destination MAC address, and the like. This is not limited herein. In addition, the source IPv6 address is an IPv6 address of the first node. The source MAC address is a MAC address of the first node. The destination MAC address is a MAC address corresponding to the first IPv6 address.

Optionally, if the source IPv6 address and the destination IPv6 address are addresses in different network segments, the first IPv6 address is a next-hop address obtained by the first node from a routing table or a forwarding table of the first node based on the first packet. If the source IPv6 address and the destination IPv6 address are addresses in a same network segment, the first IPv6 address is the destination IPv6 address. In other words, it can be learned that whether the source IPv6 address and the destination IPv6 address are the addresses in the same network segment is determined, to determine first IPv6 addresses in different networking scenarios.

That the source IPv6 address and the destination IPv6 address are addresses in different network segments may be understood as: A first network address and a second network address are different. The first network address is obtained by the first node based on a bitwise AND operation on the source IPv6 address and a subnet mask. The second network address is obtained by the first node based on a bitwise AND operation on the destination IPv6 address and a subnet mask. Similarly, that the source IPv6 address and the destination IPv6 address are addresses in a same network segment may be understood as: The first network address and the second network address are the same.

That the first IPv6 address is a next-hop address obtained from a routing table or a forwarding table of the first node based on the first packet may be understood as: The first IPv6 address is the next-hop address obtained from the routing table or the forwarding table of the first node based on the source IPv6 address and/or the destination IPv6 address.

402: The first node searches a first area for the MAC address corresponding to the first IPv6 address. The first area is a neighbor cache table.

The neighbor cache table in step 402 may be implemented in the foregoing manner 1.1 or manner 1.2. This is not limited herein. It may be understood that, the neighbor cache table in step 402 is a neighbor cache table of a second interface. The second interface is an interface determined by the first node based on the routing table or the forwarding table of the first node. The second interface may be an Ethernet main interface or virtual local area network VLAN sub-interface, or the second interface may be an Eth-trunk main interface or VLAN sub-interface. This is not limited herein.

Optionally, step 402 may include: The first node searches the first area for a MAC address in a neighbor cache entry in which a destination IPv6 address is the same as the first IPv6 address, and uses the address as the MAC address corresponding to the first IPv6 address. In other words, it can be learned that MAC address learning is implemented.

403: If the MAC address corresponding to the first IPv6 address is not found in the first area, the first node obtains, from a second area based on identification information of a first interface, the MAC address corresponding to the first IPv6 address. The first interface is an outbound interface of the first packet. The second area includes a correspondence between identification information of an interface and a MAC address.

The outbound interface is an Ethernet main interface or virtual local area network VLAN sub-interface, or the outbound interface is an Eth-trunk main interface or VLAN sub-interface. It may be understood that the identification information of the first interface may be identification information of the Ethernet main interface or virtual local area network VLAN sub-interface, or identification information of the Eth-trunk main interface or VLAN sub-interface.

Optionally, the first interface and the second interface are a same interface.

That the second area includes a correspondence between identification information of an interface and a MAC address may be understood as: The second area includes a correspondence between identification information of a plurality of interfaces of the first node and one MAC address, or a one-to-one correspondence between identification information of a plurality of interfaces of the first node and a plurality of MAC addresses. The plurality of interfaces of the first node may include the first interface. It should be noted that, for an interface other than the first interface, for a process in which the first node obtains the MAC address from the second area based on identification information of the interface, refer to the process in which the first node obtains the MAC address from the second area based on the identification information of the first interface. Details are not described herein again.

Optionally, before that the first node obtains, from the second area based on the identification information of the first interface, the MAC address corresponding to the first IPv6 address, the solution may further include: The first node obtains an RA packet or a DHCP packet from the first interface. The RA packet or the DHCP packet includes a source MAC address of a data packet. The first node establishes, in the second area, a correspondence between the identification information of the first interface and the source MAC address based on the identification information of the first interface and the source MAC address. In other words, it can be learned that the first node obtains the RA packet or the DHCP packet from the first interface, and the first node may establish, in the second area, the correspondence between the identification information of the first interface and the source MAC address of the data packet based on the identification information of the first interface and the source MAC address included in the RA packet or the DHCP packet. In this way, the correspondence between the identification information of the first interface and the source MAC address can be stored in a flood attack scenario, and the first node may learn the MAC address based on the correspondence between the identification information of the first interface and the source MAC address, and perform service forwarding by using the learned MAC address, to avoid service interruption.

For the RA packet or the DHCP packet, refer to the foregoing related descriptions. Details are not described herein again.

Optionally, that the first node obtains an RA packet from the first interface includes: If an RA packet sent by one router node is received from the first interface, the first node determines the RA packet sent by the router node as the RA packet; or if RA packets sent by a plurality of router nodes are received from the first interface, the first node determines a high-priority RA packet in the RA packets sent by the plurality of router nodes as the RA packet. In other words, it can be learned that when the first node receives the RA packet sent by one or more router nodes, the first node selects a corresponding RA packet in different cases, to prepare for subsequently establishing, in the second area, the correspondence between the identification information of the first interface and the source MAC address.

Optionally, the solution may further include: The first node sends a second packet. The second packet is used to request the MAC address corresponding to the first IPv6 address. The first node receives a third packet. The third packet includes the MAC address corresponding to the first IPv6 address. That the first node obtains, from a second area based on identification information of a first interface, the MAC address corresponding to the first IPv6 address includes: If a neighbor cache entry cannot be established in the first area based on the third packet, the first node determines, from the second area, identification information that is of a target interface and that matches the identification information of the first interface. The first node obtains, based on the correspondence included in the second area, a MAC address corresponding to the identification information of the target interface, and uses the address as the MAC address corresponding to the first IPv6 address. In other words, it can be learned that only when the first node cannot establish the neighbor cache entry based on the third packet, the first node chooses to determine, from the second area, the identification information that is of the target interface and that matches the identification information of the first interface. In this way, the MAC address corresponding to the identification information of the target interface is learned based on the correspondence included in the second area, and service forwarding can be performed by using the learned MAC address, to avoid the service interruption.

The second packet is an NS packet, and the NS packet may include one or more of the following: a source IPv6 address, a destination IPv6 address, a source MAC address, a destination MAC address, and the like. This is not limited herein. The source IPv6 address is the IPv6 address of the first node, and the destination IPv6 address is an IPv6 address of another node. Similarly, the source MAC address is the MAC address of the first node, and the destination MAC address is a MAC address of another node.

The third packet is an NA packet, and the NA packet may include one or more of the following: a source IPv6 address, a destination IPv6 address, a source MAC address, a destination MAC address, and the like. This is not limited herein. The source IPv6 address is an IPv6 address of another node. The source MAC address is a MAC address of another node. The destination MAC address is the MAC address of the first node. It may be understood that the source MAC address in the second packet is the destination MAC address of the third packet, and the destination MAC address in the second packet is the source MAC address of the third packet.

Optionally, the first node may send the second packet after the first node does not find, in the first area, the MAC address corresponding to the first IPv6 address. In other words, when the first node does not find, in the first area, the MAC address corresponding to the first IPv6 address, the first node may send the second packet, to request the MAC address corresponding to the first IPv6 address.

The neighbor cache entry cannot be established in the first area based on the third packet because the first area is fully occupied. In other words, when the first area is fully occupied due to a flood attack, the first node cannot establish, in the first area, a neighbor cache entry that includes the source IPv6 address and the source MAC address of the third packet.

404: The first node sends the first packet based on the MAC address corresponding to the first IPv6 address.

For example, the first node sends the first packet to a second node based on the MAC address corresponding to the first IPv6 address. The MAC address of the second node may be the MAC address corresponding to the first IPv6 address.

It can be learned that, in the foregoing technical solution, when the first node does not find, in the neighbor cache table, the MAC address corresponding to the first IPv6 address, the first node may obtain, from the second area based on the identification information of the outbound interface of the first packet, the MAC address corresponding to the first IPv6 address. In this way, the first node may send the first packet based on the MAC address corresponding to the first IPv6 address, to avoid a problem in which service interruption is caused because a MAC address cannot be learned from the neighbor cache table.

The foregoing mainly describes, from a perspective of exchange between network elements, the solutions provided in this application. It may be understood that, to implement the foregoing functions, the foregoing network elements include corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first node, the second node, and the like may be divided into functional modules based on the foregoing method examples. For example, the functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

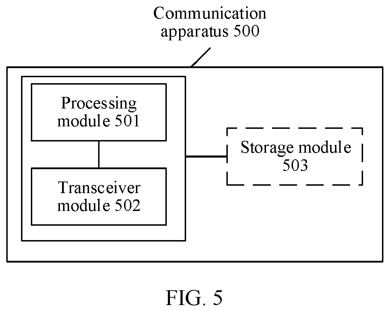

When an integrated unit is used, refer to FIG. 5. FIG. 5 is a schematic of a structure of a communication apparatus according to an embodiment of this application. The communication apparatus 500 may be used in the methods shown in FIG. 3 and FIG. 4. As shown in FIG. 5, the communication apparatus 500 includes a processing module 501 and a transceiver module 502. The processing module 501 may be one or more processors. The transceiver module 502 may be a forwarding unit, and the forwarding unit may be implemented by using an independent chip or a logical software design. The communication apparatus may be configured to implement a function of a first node and a second node in any one of the foregoing method embodiments, or configured to implement a function of a network element in any one of the foregoing method embodiments. The network element or a network function may be a network element in a hardware device, a software function running on dedicated hardware, or a virtualization function instantiated on a platform (for example, a cloud platform). Optionally, the communication apparatus 500 may further include a storage module 503, configured to store program code and data that are of the communication apparatus 500.

In an example, when the communication apparatus is used as the first node or a chip used in the first node, and steps performed by the first node according to the foregoing method embodiments are performed, the transceiver module 502 is configured to support communication with the second node and the like. For example, the transceiver module 502 is configured to perform sending and/or receiving actions performed by the first node in FIG. 3 and FIG. 4. Specifically, the transceiver module 502 is configured to support the first node in performing one or more of step 301 and step 404, and/or is configured to perform another process of the technology described in this specification. The processing module 501 may be configured to support the communication apparatus 500 in performing a processing action in the foregoing method embodiments. For example, the processing module 501 is configured to support performing one or more of step 302 and steps 401 to 403, and/or is configured to perform the processing action described in this specification.

For example, the transceiver module 502 is configured to receive a first packet from the second node. The first packet includes a source IPv6 address of a data packet, and the source IPv6 address of the data packet is a next-hop address in a routing table or a forwarding table of the first node. The processing module 501 is configured to establish a first neighbor cache entry. A destination IPv6 address included in the first neighbor cache entry is the source IPv6 address of the data packet.

For another example, the processing module 501 is configured to obtain a first IPv6 address corresponding to the first packet. The processing module 501 is further configured to search a first area for a media access control MAC address corresponding to the first IPv6 address. The first area is a neighbor cache table. If the MAC address corresponding to the first IPv6 address is not found in the first area, the processing module 501 is further configured to obtain, from a second area based on identification information of a first interface, the MAC address corresponding to the first IPv6 address. The first interface is an outbound interface of the first packet. The outbound interface is an Ethernet main interface or virtual local area network VLAN sub-interface, or the outbound interface is an Eth-trunk main interface or VLAN sub-interface. The second area includes a correspondence between identification information of an interface and a MAC address. The transceiver module 502 is configured to send the first packet based on the MAC address corresponding to the first IPv6 address.

In an example, when the communication apparatus is used as the second node or a chip used in the second node, and steps performed by the second node according to the foregoing method embodiments are performed, the transceiver module 502 is configured to support communication with the first node and the like. For example, the transceiver module 502 is configured to perform sending and/or receiving actions performed by the second node in FIG. 3 and FIG. 4. Specifically, the transceiver module 502 is configured to support the second node in performing step 301, and/or is configured to perform another process of the technology described in this specification. The processing module 501 may be configured to support the communication apparatus 500 in performing the processing action in the method embodiments.

In a possible implementation, when the first node or the second node is the chip, the transceiver module 502 may be the forwarding unit, and the forwarding unit may be implemented by using the independent chip or the logical software design. The forwarding unit is connected to the processor through the bus.

The processing module 501 may be a processor. The processor may execute computer-executable instructions stored in the storage module, to enable the chip to perform the methods according to embodiments in FIG. 3 and FIG. 4.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for storing a quantity of register operations, intermediate operation results, and the like that are temporarily stored during instruction execution. In specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS) architecture, an advanced RISC machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that functions corresponding to the processor and the forwarding unit may be achieved by using a hardware design, a software design, or a combination of software and hardware. This is not limited herein.

An embodiment of this application further provides a communication apparatus including a processor and a memory. The processor invokes a computer program stored in the memory to implement the embodiments described in FIG. 3 and FIG. 4.

An embodiment of this application further provides a computer-readable storage medium. The computer-readable storage medium stores a computer program. When the computer program is run, the embodiments described in FIG. 3 and FIG. 4 are implemented.

An embodiment of this application further provides a computer program product including instructions. When the instructions are executed on a computer, the embodiments described in FIG. 3 and FIG. 4 are performed.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the foregoing integrated unit is implemented in the form of a software network element unit and sold or used as an independent product, the integrated unit may be stored in a computer-readable storage medium. Based on such an understanding, the part of the technical solutions of this application that essentially makes a contribution or all or some of the technical solutions may be implemented in a form of a software product. The computer software product is stored in a storage medium, and includes several instructions for instructing a computer device (which may be a personal computer, a cloud server, a network device, or the like) to perform all or some of the steps of the methods in embodiments of this application. The foregoing storage medium includes any medium that may store program code, such as a USB flash drive, a removable hard disk, a read-only memory (ROM, Read-Only Memory), a random access memory (RAM, Random Access Memory), a magnetic disk, or an optical disc.

## Claims

1. A flood attack defense method, wherein the method comprises:
receiving (301), by a first node, a first packet from a second node, wherein the first packet comprises a source internet protocol version 6, IPv6, address of a data packet, and the source IPv6 address of the data packet is a next-hop address in a routing table or a forwarding table of the first node; and
establishing (302), by the first node, a first neighbor cache entry, wherein a destination IPv6 address comprised in the first neighbor cache entry is the source IPv6 address of the data packet,
wherein the establishing (302), by the first node, a first neighbor cache entry comprises:
preferentially overwriting, by the first node, a second neighbor cache entry with the first neighbor cache entry, wherein a destination IPv6 address comprised in the second neighbor cache entry is not the next-hop address in the routing table or the forwarding table of the first node,
wherein a first area that is in the first node and that stores a neighbor cache entry is fully occupied, the first area is a neighbor cache table, the neighbor cache entry in the first area comprises a destination IPv6 address, and the second neighbor cache entry is comprised in the first area; and the preferentially overwriting, by the first node, a second neighbor cache entry with the first neighbor cache entry comprises:
changing, by the first node, the second neighbor cache entry to the first neighbor cache entry, and
wherein the neighbor cache entry in the first area further comprises aging time, and the second neighbor cache entry is a neighbor cache entry in which aging time is the shortest in the first area,
wherein the neighbor cache entry comprises the destination IPv6 address, a MAC address, a state, and aging time, and
wherein the state includes one of the following: an incomplete state, a reachable state, a stale state, a delay state, a probe state, and an empty state.

2. The method according to claim 1, wherein a second area that is in the first node and that stores a neighbor cache entry is fully occupied, the second area is a neighbor cache table, the neighbor cache entry in the second area comprises priority information and a destination IPv6 address, and the second neighbor cache entry is comprised in the second area; and the preferentially overwriting, by the first node, a second neighbor cache entry with the first neighbor cache entry comprises:
changing, by the first node, the second neighbor cache entry to the first neighbor cache entry, wherein priority information comprised in the second neighbor cache entry is lower than priority information comprised in a third neighbor cache entry in the second area, and a destination IPv6 address comprised in the third neighbor cache entry is the next-hop address in the routing table or the forwarding table of the first node.

3. The method according to claim 2, wherein the neighbor cache entry in the second area further comprises aging time, and the second neighbor cache entry is a neighbor cache entry in which aging time is the shortest in the second area.

4. The method according to claim 1, wherein areas in the first node that store a neighbor cache entry comprise a third area and a fourth area, the third area and the fourth area are neighbor cache tables, a destination IPv6 address comprised in a neighbor cache entry in the third area is the next-hop address in the routing table or the forwarding table of the first node, a destination IPv6 address comprised in a neighbor cache entry in the fourth area is not the next-hop address in the routing table or the forwarding table of the first node, and the fourth area is fully occupied; and the establishing, by the first node, the neighbor cache entry comprises:
establishing, by the first node, the first neighbor cache entry in the third area.

5. The method according to claim 4, wherein the establishing (302), by the first node, the first neighbor cache entry in the third area comprises:
determining, by the first node, whether a fourth neighbor cache entry exists in the third area, wherein a media access control, MAC, address comprised in the fourth neighbor cache entry is an invalid value, and a destination IPv6 address comprised in the fourth neighbor cache entry is the source IPv6 address of the data packet; and
if the fourth neighbor cache entry exists, changing, by the first node, the fourth neighbor cache entry to the first neighbor cache entry; or
if the fourth neighbor cache entry does not exist, establishing, by the first node, the first neighbor cache entry in the third area.

6. A communication apparatus (500), comprising a unit configured to perform the method according to any one of claims 1 to 5.

7. A computer-readable storage medium, wherein the computer-readable storage medium stores instructions, and when the instructions are run on a computer, a processor is enabled to perform the method according to any one of claims 1 to 5.

8. A computer program product comprising instructions, wherein when the instructions are run on a computer, the computer is enabled to perform the method according to any one of claims 1 to 5.

## Patentansprüche

1. Verfahren zur Abwehr von Flutangriffen, wobei das Verfahren umfasst:
Empfangen (301), durch einen ersten Knoten, eines ersten Datenpakets von einem zweiten Knoten, wobei das erste Datenpaket eine Quelladresse einer Internetprotokoll-Version 6, IPv6-Quelladresse, eines Datenpakets umfasst und die IPv6-Quelladresse des Datenpakets eine Adresse des nächsten Sprungs in einer Routing-Tabelle oder einer Weiterleitungstabelle des ersten Knotens ist; und
Einrichten (302) eines ersten Nachbar-Cache-Eintrags durch den ersten Knoten, wobei eine IPv6-Zieladresse, die in dem ersten Nachbar-Cache-Eintrag enthalten ist, die IPv6-Quelladresse des Datenpakets ist,
wobei das Einrichten (302) eines ersten Nachbar-Cache-Eintrags durch den ersten Knoten umfasst:
vorzugsweise Überschreiben, durch den ersten Knoten, eines zweiten Nachbar-Cache-Eintrags mit dem ersten Nachbar-Cache-Eintrag, wobei eine IPv6-Zieladresse, die in dem zweiten Nachbar-Cache-Eintrag enthalten ist, nicht die Adresse des nächsten Sprungs in der Routing-Tabelle oder der Weiterleitungstabelle des ersten Knotens ist,
wobei ein erster Bereich, der sich in dem ersten Knoten befindet und in dem ein Nachbar-Cache-Eintrag gespeichert ist, vollständig belegt ist, wobei der erste Bereich eine Nachbar-Cache-Tabelle ist, wobei der Nachbar-Cache-Eintrag in dem ersten Bereich eine IPv6-Zieladresse umfasst und wobei der zweite Nachbar-Cache-Eintrag in dem ersten Bereich enthalten ist; und wobei das vorzugsweise Überschreiben, durch den ersten Knoten, eines zweiten Nachbar-Cache-Eintrags mit dem ersten Nachbar-Cache-Eintrag umfasst:
Ändern, durch den ersten Knoten, des zweiten Nachbar-Cache-Eintrags in den ersten Nachbar-Cache-Eintrag, und
wobei der Nachbar-Cache-Eintrag in dem ersten Bereich ferner eine Verweilzeit umfasst und wobei der zweite Nachbar-Cache-Eintrag ein Nachbar-Cache-Eintrag ist, dessen Verweilzeit die Kürzeste in dem ersten Bereich ist,
wobei der Nachbar-Cache-Eintrag die IPv6-Zieladresse, eine MAC-Adresse, einen Zustand und eine Verweilzeit umfasst, und
wobei der Zustand einen der Folgenden beinhaltet: einen unvollständigen Zustand, einen erreichbaren Zustand, einen veralteten Zustand, einen Verzögerungszustand, einen Prüfzustand und einen leeren Zustand.

2. Verfahren nach Anspruch 1, wobei ein zweiter Bereich, der sich in dem ersten Knoten befindet und in dem ein Nachbar-Cache-Eintrag gespeichert ist, vollständig belegt ist, wobei der zweite Bereich eine Nachbar-Cache-Tabelle ist, wobei der Nachbar-Cache-Eintrag in dem zweiten Bereich Prioritätsinformationen und eine IPv6-Zieladresse umfasst und wobei der zweite Nachbar-Cache-Eintrag in dem zweiten Bereich enthalten ist; und wobei das vorzugsweise Überschreiben eines zweiten Nachbar-Cache-Eintrags mit dem ersten Nachbar-Cache-Eintrag durch den ersten Knoten umfasst:
Ändern, durch den ersten Knoten, des zweiten Nachbar-Cache-Eintrags in den ersten Nachbar-Cache-Eintrag, wobei die Prioritätsinformationen, die in dem zweiten Nachbar-Cache-Eintrag enthalten sind, niedriger sind als die Prioritätsinformationen, die in einem dritten Nachbar-Cache-Eintrag in dem zweiten Bereich enthalten sind, und wobei eine IPv6-Zieladresse, die in dem dritten Nachbar-Cache-Eintrag enthalten ist, die Adresse des nächsten Sprungs in der Routing-Tabelle oder der Weiterleitungstabelle des ersten Knotens ist.

3. Verfahren nach Anspruch 2, wobei der Nachbar-Cache-Eintrag in dem zweiten Bereich ferner eine Verweilzeit umfasst und wobei der zweite Nachbar-Cache-Eintrag ein Nachbar-Cache-Eintrag ist, dessen Verweilzeit die Kürzeste in dem zweiten Bereich ist.

4. Verfahren nach Anspruch 1, wobei Bereiche in dem ersten Knoten, in denen ein Nachbar-Cache-Eintrag gespeichert ist, einen dritten Bereich und einen vierten Bereich umfassen, wobei der dritte Bereich und der vierte Bereich Nachbar-Cache-Tabellen sind, wobei eine IPv6-Zieladresse, die in einem Nachbar-Cache-Eintrag in dem dritten Bereich enthalten ist, die Adresse des nächsten Sprungs in der Routing-Tabelle oder der Weiterleitungstabelle des ersten Knotens ist, wobei eine IPv6-Zieladresse, die in einem Nachbar-Cache-Eintrag in dem vierten Bereich enthalten ist, nicht die Adresse des nächsten Sprungs in der Routing-Tabelle oder der Weiterleitungstabelle des ersten Knotens ist und wobei der vierte Bereich vollständig belegt ist; und wobei das Einrichten des Nachbar-Cache-Eintrags durch den ersten Knoten umfasst:
Einrichten des ersten Nachbar-Cache-Eintrags in dem dritten Bereich durch den ersten Knoten.

5. Verfahren nach Anspruch 4, wobei das Einrichten (302) des ersten Nachbar-Cache-Eintrags in dem dritten Bereich durch den ersten Knoten umfasst:
Ermitteln, durch den ersten Knoten, ob ein vierter Nachbar-Cache-Eintrag in dem dritten Bereich vorhanden ist, wobei eine Adresse einer Medienzugangssteuerung, MAC-Adresse, die in dem vierten Nachbar-Cache-Eintrag enthalten ist, ein ungültiger Wert ist, und wobei eine IPv6-Zieladresse, die in dem vierten Nachbar-Cache-Eintrag enthalten ist, die IPv6-Quelladresse des Datenpakets ist; und
wenn der vierte Nachbar-Cache-Eintrag vorhanden ist, Ändern, durch den ersten Knoten, des vierten Nachbar-Cache-Eintrags in den ersten Nachbar-Cache-Eintrag; oder
wenn der vierte Nachbar-Cache-Eintrag nicht vorhanden ist, Einrichten des ersten Nachbar-Cache-Eintrags in dem dritten Bereich durch den ersten Knoten.

6. Kommunikationsvorrichtung (500), die eine Einheit umfasst, die konfiguriert ist, um das Verfahren nach einem der Ansprüche 1 bis 5 durchzuführen.

7. Computerlesbares Speichermedium, wobei in dem computerlesbaren Speichermedium Anweisungen gespeichert sind; und, wenn die Anweisungen in einem Computer ausgeführt werden, ein Prozessor aktiviert wird, um das Verfahren nach einem der Ansprüche 1 bis 5 durchzuführen.

8. Computerprogrammprodukt, das Anweisungen umfasst, wobei, wenn die Anweisungen in einem Computer ausgeführt werden, der Computer aktiviert wird, um das Verfahren nach einem der Ansprüche 1 bis 5 durchzuführen.

## Revendications

1. Procédé de défense contre les attaques par inondation, le procédé comprenant :
la réception (301), par un premier nœud, d'un premier paquet en provenance d'un deuxième nœud, le premier paquet comprenant une adresse de protocole Internet version 6, IPv6, source d'un paquet de données, et l'adresse IPv6 source du paquet de données étant une adresse de prochain saut dans une table de routage ou une table de transfert du premier nœud ; et
l'établissement (302), par le premier nœud, d'une première entrée de cache de voisins, une adresse IPv6 de destination comprise dans la première entrée de cache de voisins étant l'adresse IPv6 source du paquet de données,
dans lequel l'établissement (302), par le premier nœud, d'une première entrée de cache de voisins comprend :
l'écrasement préférentiel, par le premier nœud, d'une deuxième entrée de cache de voisins par la première entrée de cache de voisins, une adresse IPv6 de destination comprise dans la deuxième entrée de cache de voisins n'étant pas l'adresse de prochain saut dans la table de routage ou la table de transfert du premier nœud,
dans lequel une première zone située dans le premier nœud et stockant une entrée de cache de voisins est entièrement occupée, la première zone est une table de cache de voisins, l'entrée de cache de voisins dans la première zone comprend une adresse IPv6 de destination, et la deuxième entrée de cache de voisins est comprise dans la première zone ; et l'écrasement préférentiel, par le premier nœud, d'une deuxième entrée de cache de voisins par la première entrée de cache de voisins comprend :
le remplacement, par le premier nœud, de la deuxième entrée de cache de voisins par la première entrée de cache de voisins, et
dans lequel l'entrée de cache de voisins dans la première zone comprend en outre une durée de vieillissement, et la deuxième entrée de cache de voisins est une entrée de cache de voisins dont la durée de vieillissement est la plus courte dans la première zone,
dans lequel l'entrée de cache de voisins comprend l'adresse IPv6 de destination, une adresse MAC, un état et une durée de vieillissement, et
dans lequel l'état comporte l'un des états suivants : un état incomplet, un état atteignable, un état obsolète, un état retard, un état sonde et un état vide.

2. Procédé selon la revendication 1, dans lequel une deuxième zone située dans le premier nœud et stockant une entrée de cache de voisins est entièrement occupée, la deuxième zone est une table de cache de voisins, l'entrée de cache de voisins dans la deuxième zone comprend des informations de priorité et une adresse IPv6 de destination, et la deuxième entrée de cache de voisins est comprise dans la deuxième zone ; et l'écrasement préférentiel, par le premier nœud, d'une deuxième entrée de cache de voisins par la première entrée de cache de voisins comprend :
le remplacement, par le premier nœud, de la deuxième entrée de cache de voisins par la première entrée de cache de voisins, des informations de priorité comprises dans la deuxième entrée de cache de voisins étant inférieures à des informations de priorité comprises dans une troisième entrée de cache de voisins dans la deuxième zone, et une adresse IPv6 de destination comprise dans la troisième entrée de cache de voisins étant l'adresse de prochain saut dans la table de routage ou la table de transfert du premier nœud.

3. Procédé selon la revendication 2, dans lequel l'entrée de cache de voisins dans la deuxième zone comprend en outre une durée de vieillissement, et la deuxième entrée de cache de voisins est une entrée de cache de voisins dont la durée de vieillissement est la plus courte dans la deuxième zone.

4. Procédé selon la revendication 1, dans lequel des zones dans le premier nœud stockant une entrée de cache de voisins comprennent une troisième zone et une quatrième zone, la troisième zone et la quatrième zone sont des tables de cache de voisins, une adresse IPv6 de destination comprise dans une entrée de cache de voisins dans la troisième zone est l'adresse de prochain saut dans la table de routage ou la table de transfert du premier nœud, une adresse IPv6 de destination comprise dans une entrée de cache de voisins dans la quatrième zone n'est pas l'adresse de prochain saut dans la table de routage ou la table de transfert du premier nœud, et la quatrième zone est entièrement occupée ; et l'établissement, par le premier nœud, de l'entrée de cache de voisins comprend :
l'établissement, par le premier nœud, de la première entrée de cache de voisins dans la troisième zone.

5. Procédé selon la revendication 4, dans lequel l'établissement (302), par le premier nœud, de la première entrée de cache de voisins dans la troisième zone comprend :
la détermination, par le premier nœud, de l'existence ou non d'une quatrième entrée de cache de voisins dans la troisième zone, une adresse de contrôle d'accès au support, MAC, comprise dans la quatrième entrée de cache de voisins étant une valeur invalide, et une adresse IPv6 de destination comprise dans la quatrième entrée de cache de voisins étant l'adresse IPv6 source du paquet de données ; et
si la quatrième entrée de cache de voisins existe, le remplacement, par le premier nœud, de la quatrième entrée de cache de voisins par la première entrée de cache de voisins ; ou
si la quatrième entrée de cache de voisins n'existe pas, l'établissement, par le premier nœud, de la première entrée de cache de voisins dans la troisième zone.

6. Appareil de communication (500), comprenant une unité configurée pour réaliser le procédé selon l'une quelconque des revendications 1 à 5.

7. Support de stockage lisible par ordinateur, le support de stockage lisible par ordinateur stockant des instructions et, lorsque les instructions sont exécutées sur un ordinateur, un processeur étant amené à réaliser le procédé selon l'une quelconque des revendications 1 à 5.

8. Produit programme d'ordinateur comprenant des instructions, lesquelles instructions, lorsqu'elles sont exécutées sur un ordinateur, amènent l'ordinateur à réaliser le procédé selon l'une quelconque des revendications 1 à 5.
